# EUROPÄISCHE PATENTSCHRIFT

(11) **EP 1 251 244 B1**
(45) Veröffentlichungstag und Bekanntmachung des Hinweises auf die Patenterteilung: **01.09.2010**
(21) Anmeldenummer: 01810376.2
(22) Anmeldetag: 17.04.2001
(51) Int. Cl.: F01D 17/08, F02C 9/28

(54) **Verfahren zur Unterdrückung von Verbrennungsfluktuationen in einer Gasturbine**
Method for suppressing combustion fluctuations in a gas turbine
Méthode de suppression des fluctuations de combustion dans une turbine à gaz

(43) Veröffentlichungstag der Anmeldung: 23.10.2002
(73) Patentinhaber: Alstom Technology Ltd, 5400 Baden (CH)
(72) Erfinder: Weisenstein, Wolfgang, 5453 Remetschwil (CH); Ganz, Christopher, 8046 Zürich (CH)

(56) Entgegenhaltungen:
- EP-A- 1 065 346
- DE-A- 19 921 981
- GB-A- 749 598
- US-A- 5 544 478
- US-A- 5 971 747

## Beschreibung

### Technisches Gebiet

Die Erfindung betrifft ein Verfahren zur Unterdrückung von Verbrennungsfluktuationen in einer Gasturbine gemäss Oberbegriff des Anspruchs 1.

### Stand der Technik

Aus EP 1 065 346 A1 bekannt geworden Temperatursensoren in Leitschaufeln einer ersten Leitschaufelreihe einer Gasturbine anzuordnen. Anhand von gemessenen Temperaturwerten jeweils eines Temperatursensors wird jeweils ein Brenner, welcher dem Temperatursensor zugeordnet ist, geregelt. Einem Temperatursensor sind in einer Ringbrennkammer ein oder mehrere Brenner zugeordnet, die dem Sensor in einem Umfangssegment der Gasturbine gegenüberliegen und somit seine Temperatur am unmittelbarsten beeinflussen. Die Regelung vergleichmässigt eine Temperaturverteilung über einen Umfang des Brennkammeraustritts, so dass eine Laufschaufel der Turbine während einer Umdrehung einer möglichst gleichmässigen Temperatur ausgesetzt ist.

Sowohl in radialer Richtung als auch entlang des Umfangs, also in azimutaler Richtung, ist die Temperaturverteilung der Verbrennungsgase zu vergleichmässigen, um eine thermische Belastung einer ersten Turbinenleitreihe zu minimieren. Heissgas, das aus einer Flamme kommt, hat eine andere Temperatur als Gas, das aus Bereichen zwischen den Flammen stammt oder als Kühlluft zugemischt wird. In gängigen Brennkammerkonstruktionen wird eine möglichst starke Turbulenz erzwungen, wodurch eine Vermischung der Gasströme und eine teilweise Vergleichmässigung der Temperaturen erreicht wird. Dies hat jedoch den Nachteil, dass zur Erzeugung dieser Turbulenz Energie nötig ist, die sich in einem erhöhten Brennkammer-Druckabfall und damit einem schlechteren Gesamtwirkungsgrad der Maschine niederschlägt. Ausserdem wird durch die höhere Turbulenz die Aufenthaltszeit der Gasmoleküle im heissen Bereich der Brennkammer verlängert, wodurch die thermische Bildung von Stickoxiden nach dem Zeldovic-Mechanismus erhöht wird.

Ein zusätzliches Problem bei modernen Gasturbinen-Brennkammern ist das Auftreten von Verbrennungsfluktuationen, die durch schwankende Wärmefreisetzung Druckpulsationen erzeugen, die wiederum eine hohe mechanische Belastung für die Brennkammer- und Turbinenwerkstoffe darstellen. Dieser Belastung wird in modernen Entwicklungen durch eine aktive Kontrolle der Verbrennungsstabilität begegnet wie sie z. B. in K. C. Schadow, E. Gutmark and K. J. Wilson "Active combustion control in a coaxial dump combustor" Combust. Sci. Technol. 81, 285 (1992) oder in C. O. Paschereit, E. Gutmark and W. Weisenstein "Control of thermoacoustic instabilities and emissions in an industrial type gas turbine combustor" 27th International Symposium on Combustion, The Combustion Institute, August 2-7 1998 beschrieben ist. Eines der wesentlichen Probleme beim praktischen Einsatz der dort beschriebenen Entwicklungen ist jedoch die sensorische Erkennung der Natur von auftretenden Verbrennungsfluktuationen und ihrer Ursachen. Auch wenn die Ursachen im Versuchsmassstab mittlerweile recht gut bekannt und, wie z.B. in C. O. Paschereit, E. Gutmark and W. Weisenstein "Coherent structures in swirling flows and their role in acoustic combustion control" Physics of Fluids 11, No. 9, September 1999, dokumentiert sind, ergeben sich in der Verknüpfung von aktuellen Messungen mit geeigneten Gegenmassnahmen aufgrund der zur Zeit noch mangelhaften Sensorik z. T. beträchtliche Schwierigkeiten beim Ergreifen geeigneter Gegenmassnahmen vor allem bei azimutalen Fluktuationsmoden.

Aus EP-A1-1 065 346 ist eine Gasturbinenbrennkammer bekannt geworden, wobei abströmungsseitig der Brennkammer eine Leitschaufelreihe einer Turbine angeordnet ist. Zur Messung der Temperaturen sind Temperatursensoren vorgesehen, wobei auf Grund der ermittelten Temperaturen eine Regelung der Brennstoffeinbringung stattfindet.

Es wird des Weiteren auf US-A-5 544 478 hingewiesen.

### Darstellung der Erfindung

Es ist deshalb Aufgabe der Erfindung ein Verfahren zur Unterdrückung von Verbrennungsfluktuation in einer Gasturbine der eingangs genannten Art zu schaffen, welche die oben genannten Nachteile behebt.

Diese Aufgabe wird mit den Merkmalen des Patentanspruches 1 gelöst.

Beim erfindungsgemässen Verfahren wirken als Temperatursensoren Spektrometer, die zur Messung einer Verbrennungsgastemperatur ausgebildet sind und zur Messung einer Gastemperatur, welche unmittelbar vor einer ersten Leitschaufelreihe herrscht, angeordnet sind.

Durch die Verwendung von Spektrometern wird eine genaue und relativ hochfrequente Messung von Heissgastemperaturen ermöglicht. Zudem werden Nachteile von Thermoelementen, welche in Turbinenschaufeln eingebaut sind vermieden, wie beispielsweise Unterschiede oder Qualitätsverluste von Wärmeübergängen zwischen Schaufeln und Thermoelementen.

Im erfindungsgemässen Verfahren zur Verbrennungsregelung in einer Gasturbine werden nach Massgabe von gemessenen Temperaturwerten Mittel zur Brennstoffeinbringung in eine Brennkammer geregelt, wobei die Temperaturwerte mit Spektrometern gemessen werden, welche zur Messung einer Verbrennungsgastemperatur ausgebildet sind und Verbrennungsgastemperaturen messen, welche unmittelbar vor der ersten Leitschaufelreihe herrschen.

Dadurch wird es möglich, Temperaturüberhöhungen an der ersten Leitschaufelreihe durch Regelung der Brennstoffzufuhr zu vermeiden. Eine Bekämpfung von Temperaturüberhöhungen durch absichtlich herbeigeführte Turbulenzen ist nur noch in geringerem Masse notwendig, was zu einem besseren Wirkungsgrad und reduzierten Stickoxid-Emissionen führt.

Des Weiteren, die Temperatursensoren sind zur Messung einer Gastemperatur von Wasserdampf ausgebildet. Dazu weist es vor einem Photoelement, das die aufgenommene Strahlung in ein elektrisches Signal umwandelt, ein Bandpassfilter auf, das die Strahlung nur in solchen Frequenzbereichen passieren lässt, die nur oder vorwiegend für Wasserdampf charakteristisch sind. Dadurch wird es möglich, die Temperatur des Verbrennungsgases direkt, berührungsfrei und ohne die Strömung durch zusätzliche Bauteile zu stören, anhand einer typischen Abgaskomponente zu messen. Wasserdampf hat dabei den Vorteil, über ein sehr breites Emissionsspektrum zu verfügen, was ein starkes Messsignal und damit eine hohe Messgenauigkeit sichert, sowie bei der Verbrennung von Kohlenwasserstoffen im Verbrennungsgas immer in relativ grossen Mengen vorhanden zu sein. Ähnliche Messungen lassen sich auch mit Kohlendioxid durchführen. Grundsätzlich ist auch die Messung der Emissionen von Sauerstoff und Stickstoff möglich. Alle anderen möglichen Abgaskomponenten gelten gemeinhin als Luftschadstoffe, deren Emission durch den Einsatz moderner Techniken weiter vermindert werden sollen.

Ferner wird aufgrund von Temperaturwerten eines Temperatursensors ein zugeordnetes azimutales Gastemperaturprofil vor der ersten Leitschaufelreihe ermittelt. Es wird eine Abweichung von einem idealen vorgegebenen Gastemperaturprofil erfasst und nach Massgabe dieser Abweichung ein zugeordnetes Mittel zur Brennstoffeinbringung geregelt, um Temperaturspitzen zu eliminieren, oder es wird die Notwendigkeit einer Wartung angezeigt.

Beim erfindungsgemässen Verfahren werden anhand von Temperaturwerten von einem oder mehreren Temperatursensoren Mittel zur Brennstoffeinbringung zur Kompensation von axialsymmetrischen und/oder azimutalen Verbrennungsfluktuationen geregelt. Dies wird durch die im Gegensatz zu herkömmlichen Sensoren hohe Messfrequenz der erfindungsgemäss verwendeten Sensoren ermöglicht.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: schematisch einen Längsschnitt durch wesentliche Komponenten einer erfindungsgemässen Gasturbine;
- Figur 2: den Längsschnitt von Figur 1 mit einer alternativen regelungs- technischen Einrichtung;
- Figur 3: schematisch einen Querschnitt durch die Gasturbine;
- Figur 4: verschiedene radiale Gastemperaturprofile; und
- Figur 5: eine Detailansicht eines Brennkammeraustritts aus Figur 1.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

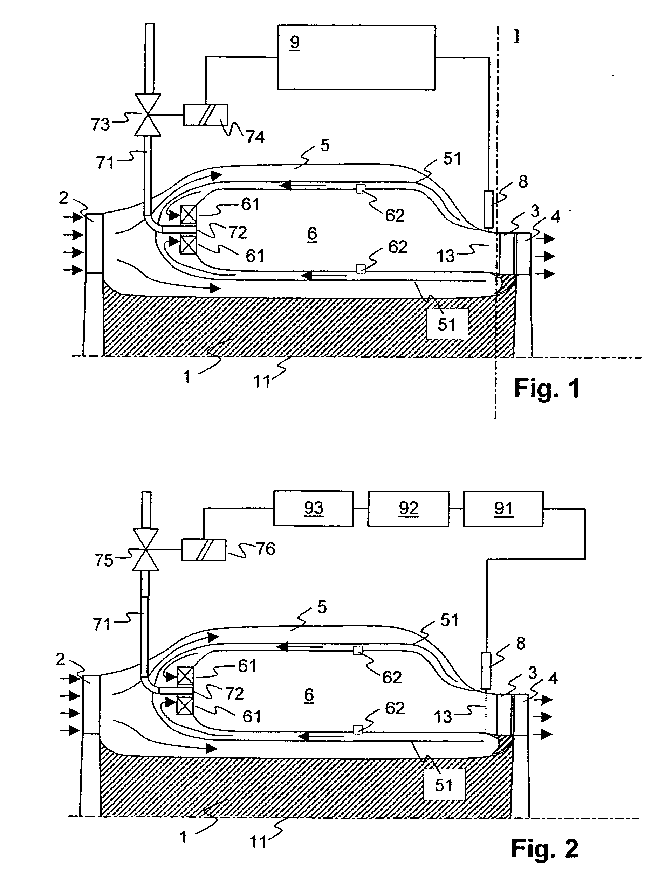

Die Figur 1 zeigt schematisch einen Längsschnitt durch erfindungswesentliche Komponenten einer erfindungsgemässen Gasturbine. Es ist nur eine Hälfte des Längsschnittes gezeichnet, die andere Hälfte ist spiegelsymmetrisch zu einer Symmetrieachse 11. Mit einem Rotor 1 verbunden ist eine letzte Verdichterschaufelreihe 2 eines nicht gezeichneten Verdichters und eine erste Laufschaufelreihe 4 einer nicht gezeichneten Turbine. Vor der ersten Laufschaufelreihe 4 ist eine erste Leitschaufelreihe 3 angeordnet. Zwischen der Verdichterschaufelreihe 2 und der ersten Leitschaufelreihe 3 befindet sich eine Brennkammer 6, umgeben von einem Plenum 5. Die genannten Komponenten werden im Betrieb der Gasturbine von einem Arbeitsmedium, normalerweise Luft, durchströmt, dessen Strömungsrichtung mit Pfeilen dargestellt ist. Die Brennkammer 6 weist Verbrennungsluftzuführungen 61, Kühlluftzuführungen 62 sowie Luftleitbleche 51 auf. Die Gasturbine weist Mittel zur Brennstoffeinbringung 7 auf, mit einer Brennstoffzuleitung 71, einer Brennstoffeindüsungsvorrichtung 72 und einem Ventil 73, das durch ein erstes Stellelement 74 betätigt wird. Erfindungsgemäss sind an einem Ausgang oder abströmseitigen Ende der Brennkammer 6 Temperatursensoren 8 angeordnet, welche nicht intrusiv, also ohne vom Arbeitsmedium umströmt zu sein, eine Temperatur des durchströmenden Arbeitsmediums, hier also von heissen Verbrennungsgasen, aufgrund einer von Gasmolekülen der Verbrennungsgase passiv abgestrahlten Temperaturstrahlung messen. Die Temperatursensoren 8 sind zur Messung der Gastemperatur, welche unmittelbar vor der ersten Leitschaufelreihe 3 herrscht, angeordnet. Dazu zeigt eine Blickrichtung 13 jedes Sensors in mindestens annähernd radialer Richtung in den Gaspfad. Jeweils ein Temperatursensor 8 ist mit einem Regler 9 wirkverbunden, und jeweils ein Regler 9 ist mit einem ersten Stellelement 74 wirkverbunden.

Die Mittel zur Brennstoffeinbringung 7 werden auch als Brenner bezeichnet. Darunter wird ein System zur Brennstoffzuführung, zur Einbringung des Brennstoffes in ein Arbeitsmedium, zur Vermischung des Brennstoffs mit dem Arbeitsmedium und gegebenenfalls zur Stabilisierung einer Flamme verstanden. Zur Erfüllung dieser Funktionen weist ein Brenner anstelle einer Brennstofflanze beispielsweise ein Flammrohr oder eine Anordnung zur Drallstabilisierung der Flamme auf.

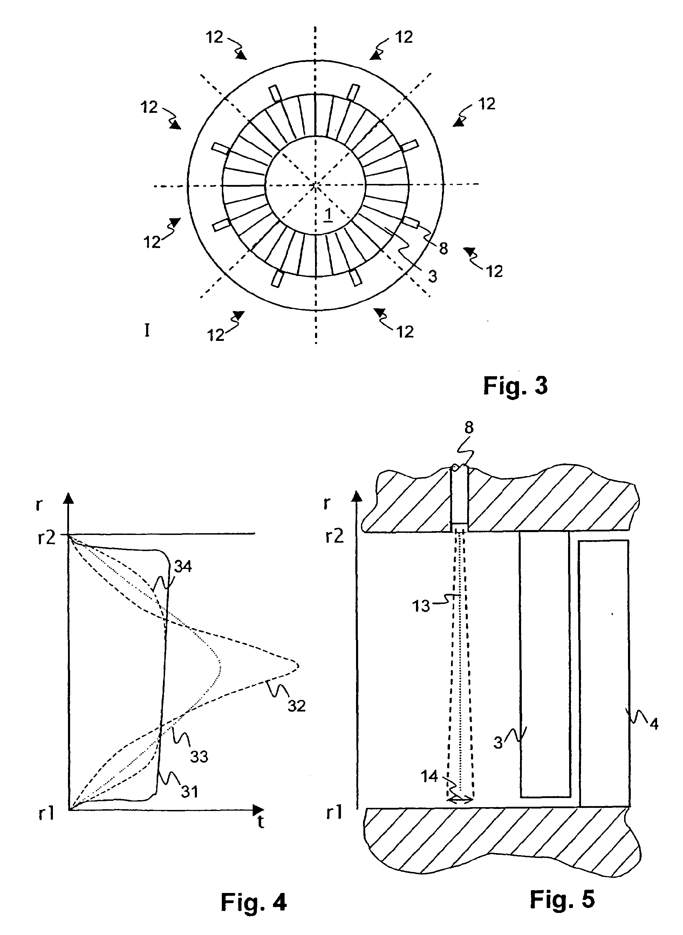

Figur 3 zeigt einen Querschnitt durch die Gasturbine aus Figur 1 in einer Schnittebene I. Wird die Gasturbine in Richtung der Rotorachse betrachtet,. so lässt sie sich gedanklich in eine Anzahl von Umfangssegmenten 12 unterteilen. In einer bevorzugten Ausführungsform der Erfindung weist jedes Umfangssegment 12 einen Temperatursensor 8, einen zugeordneten Regler 9 und zugeordnete Mittel zur Brennstoffeinbringung 7 auf. In einer anderen Ausführungsform der Erfindung weist ein Umfangssegment 12 mehrere Brenner auf, die mittels eines gemeinsamen Ventils 73 geregelt werden und gemeinsam dem Temperatursensor 8 des Umfangssegments 12 zugeordnet sind. Es sind also mehrere Temperatursensoren 8 gleichmässig über den Umfang der Gasturbine verteilt.

Im Betrieb der Gasturbine strömt verdichtete Luft aus dem Verdichter in das Plenum 5, wird durch die Leitbleche 51 an die Brennkammerwand herangeführt und kühlt so konvektiv die Brennkammer 6. Danach wird die Luft durch die Verbrennungsluftzuführungen 61 in die Brennkammer 6 geleitet, mit Brennstoff aus der Brennstofflanze 72 vermischt und in einer Flamme verbrannt. Gegebenenfalls wird ein Teil der Luft durch Kühlluftöffnungen 62 ins Innere der Brennkammer 6 geleitet, wo sie einen Kühlluftfilm auf der Oberfläche der Brennkammerwand bildet und diese dadurch vor Überhitzung schützt. Durch eine hochturbulente Strömung innerhalb der Brennkammer werden Verbrennungsgase aus der Flamme und Kühlluft aus den Kühlluftzuführung 62 nach einiger Zeit, typischerweise nach einigen Mikrosekunden, teilweise vermischt und treten an einem abströmseitigen Ende der Brennkammer 6 durch die erste Leitschaufelreihe 3 und die erste Laufschaufelreihe 4 in die Turbine ein. Die hier beschriebenen Bedingungen gelten jedoch nur für eine Gasturbine in einwandfreiem Zustand, die sich exakt im Auslegungsbetriebspunkt befindet. Schon geringe Abweichungen von diesem Auslegungsbetriebspunkt können dazu führen, dass sich die Strömungsverhältnisse in der Brennkammer unvorteilhaft verändern.

Figur 4 zeigt vier verschiedene radiale Gastemperaturprofile 31,32,33,34 unmittelbar vor der ersten Leitschaufelreihe 3. Entlang einer radialen Richtung r sind Gastemperaturwerte in Richtung einer Gastemperaturachse t aufgetragen. Ein erster Radius r1 ist der innere Radius des Brennkammerausgangs respektive des Turbineneintritts. Ein zweiter Radius r2 ist der äussere Radius des Brennkammerausgangs respektive des Turbineneintritts. Jeweils in einem Randbereich des Gasstroms, also in der Nähe des ersten und zweiten Radius r1, r2, also in der Nähe der Brennkammerwand, sind die Gastemperaturen aufgrund der durch die Kühlluftzuführungen 62 beigemischten Kühlluft relativ niedrig, beispielsweise in einem Bereich von annähernd 730 K bis annähernd 900 K. In der Mitte zwischen dem ersten und zweiten Radius r1,r2 herrscht die höhere Temperatur der Verbrennungsgase vor, mit Temperaturen von beispielsweise ca. 1100 K bis ca. 1400 K , je nach Ausführung der Gasturbine.

Ist die Gasturbine in einem optimalen Zustand, so liegt eine vorwiegend flache Temperaturverteilung sowohl in radialer als auch in azimutaler Richtung gemäss einem ersten Gastemperaturprofil 31 vor: Die Temperaturen sind also im wesentlichen gleich hoch, mit Ausnahme der gekühlten Randbereiche des Gasstroms. Die leicht niedrigere Temperatur am inneren Rand des Strömungskanals ist erwünscht, da hier die mechanische Belastung der Laufschaufeln 4 am höchsten ist und die Temperaturbelastung daher gesenkt werden soll. Ein suboptimaler Verlauf der Temperaturverteilung entspricht den übrigen, zweiten, dritten und vierten Gastemperaturprofilen 32,33,34, weist also entweder eine lokale Überhöhung der Temperatur und an anderen Stellen tiefere Temperaturen, oder aber niedrigere Temperaturen im Aussenbereich bei einer Spitzentemperatur in gewünschter Höhe auf. Die lokale Temperaturverteilung unterscheidet sich in diesen Fällen von der an anderen Stellen am Umfang des Brennkammeraustritts, was bei allen umlaufenden Elementen der Turbine zu einer periodisch schwankenden Temperaturbelastung führt. Da die Werkstoffe der Turbinenschaufeln ohnehin bis an die zulässigen Grenzen belastet sind, führt dies zu einer deutlichen Verringerung der zu erwartenden Lebensdauer. Die ersten, zweiten und dritten Gastemperaturprofile 31,,32 und 33 entsprechen im Wesentlichen demselben Wert einer abgegebenen Leistung. Ein Wert eines Wärmestroms, das heisst dem Integral der Temperaturverteilung ist für die ersten, zweiten und dritten Gastemperaturprofile 31,32 und 33 ebenfalls im Wesentlichen derselbe. Die drei Gastemperaturprofile 31,32 und 33 weisen jedoch unterschiedliche radiale Temperaturverteilungen und unterschiedliche Spitzentemperaturen auf. Das Temperaturprofil 34 entspricht dagegen einem Fall, in dem die Spitzentemperatur zwar die gewünschte Grösse hat, der Wärmestrom durch die Messstrecke aber unterhalb des optimalen Wärmestroms liegt. Die zweiten und dritten suboptimalen Gastemperaturprofile 32 und 33 können ausserdem zu einer lokalen Überhitzung und damit zu einer unmittelbaren Beschädigung der Schaufeln der ersten Leitschaufelreihe 3 und gegebenenfalls weiterer Schaufelreihen führen. Um eine Beschädigung oder übermässige Alterung der Gasturbine zu vermeiden, ist es von Vorteil, solche suboptimalen zweite, dritte und vierte Gastemperaturprofile 32,33,34 zu detektieren, so dass Gegenmassnahmen ergriffen werden können. Die Ursache für suboptimale Temperaturprofile ist unterschiedlicher Art. Für die zweiten und dritten Gastemperaturprofile 32 und 33 liegt eine schlechte oder sogar falsche Mischung von Brennstoff und Luft bzw. Flammengas und Luft vor, während und nach der Verbrennung vor. Für das vierte Gastemperaturprofil 34 liegt die Ursache in einer ungleichmässigen Brennstoffverteilung zwischen den einzelnen Brennern, wodurch der hier betrachtete Brenner zu wenig Brennstoff erhält. Es ist auch ein Fall denkbar, bei welchem betrachteten Brenner zuviel Brennstoff zugeführt wird, sich aber trotzdem ein korrektes Temperaturprofil, lediglich mit einer zu hohen Spitzentemperatur, einstellt. Dieser Fall ist in Abb. 3 nicht dargestellt, kann aber grundsätzlich auch mit Hilfe der Erfindung detektiert werden.

Eine erste Gegenmassnahme gegen zu hohe Spitzentemperaturen ist, die Leistung der Gasturbine zu reduzieren. Beispielsweise wird nach Massgabe von gemessenen Temperaturwerten eines Temperatursensors 8 eine Brennstoffmenge des zugeordneten Brenners mittels des zugeordneten Reglers 9 und des zugeordneten ersten Stellelements 74 geregelt. Da sich durch einen geringeren Brennstoffumsatz auch die Spitzentemperaturen der jeweiligen Flammen verringern, sinkt auch die Belastung des Turbinenmaterials. Eine verringerte Turbineneintrittstemperatur senkt jedoch vor allem bei einem suboptimalen Temperaturprofil auch nachhaltig den Gesamtwirkungsgrad der Maschine. Vorteilhafter ist es, die Verbrennungsgastemperatur direkt vor dem Eintritt in die erste Turbinenleitreihe zu messen, so wie es durch die Anwendung der Erfindung möglich wird, und auf Grundlage dieser Messung die Brennstoffzufuhr des Brenners mit überhöhtem Temperaturprofil zu senken und gleichzeitig den Brennstoffstrom zu den anderen Brennern anteilig so zu erhöhen, dass a) am Austritt aller Brenner das gleiche Temperaturniveau erreicht wird und b) das gemeinsame Temperaturniveau aller Brenner die Belastungsgrenzen, die durch den Turbinenwerkstoff und die eingesetzte Kühltechnik vorgegeben sind, nicht überschritten werden. Dazu werden die Regler 9 der jeweiligen Brennkammern mit einem übergeordneten Regler zusammengeschaltet, der die Gesamtleistung und die individuelle Brennstoffströme vorgibt.

Eine zweite Gegenmassnahme sind Wartungsarbeiten, um die Strömung in der Brennkammer 6 beispielsweise durch Bearbeiten der Kühlluftzuführungen 62 zu optimieren. Bei der überwiegenden Anzahl der technisch relevanten Fälle muss hierzu jedoch die Kühlluftzufuhr vergrössert werden, da die lokale Flammentemperatur zu hoch liegt. In diesem Fall steht weniger Luft für die eigentliche Verbrennung zur Verfügung, wodurch, bei gleichem Brennstoffdurchsatz, die Flammentemperatur zunimmt. Die erhöhte Flammentemperatur führt dann zu unerwünschtem Anstieg der Stickoxid-Emissionen im Kernbereich der Flamme und zu erhöhten Kohlenmonoxid-Emissionen in der Nähe der Brennkammerwand, da durch die erhöhte Kühllufttemperatur an der Wand ein verstärktes "Quenching" der Verbrennungsreaktion auftritt. Jedoch ist es durch Anwendung der Erfindung erstmals möglich, die Art eines suboptimalen Temperaturprofils zu detektieren und daraus die notwendigen Gegenmassnahmen herzuleiten.

Die Art der Gastemperaturprofile, respektive Kennwerte zur Charakterisierung der Gastemperaturprofile werden in folgender Weise bestimmt: Figur 5 zeigt eine Detailansicht des Brennkammeraustritts aus Figur 1. Ein temperaturfestes Linsensystem nimmt die vom Verbrennungsabgas abgegebene Temperaturstrahlung auf und leitet sie über einen Lichtwellenleiter an einen Empfängerbaustein des Temperatursensors 8. Die einfallende Strahlung wird durch ein Bandpassfilter geleitet, das auf das Frequenzspektrum der gewünschten Gaskomponente, also Wasserdampf oder Kohlenstoffdioxid eingestellt ist. Die gefilterte Strahlung trifft auf ein Photoelement, das die Strahlungsintensität in ein elektrisches Signal umwandelt. Somit erfasst das Messystem eine Gastemperatur welche, in Strömungsrichtung gesehen, unmittelbar vor der ersten Leitschaufelreihe 3 herrscht, vorzugsweise in einem Abstand von mindestens annähernd 0.5 bis 1 cm und maximal annähernd 5 bis 10 cm vor der ersten Leitschaufelreihe 3. In einer bevorzugten Ausführungsform der Erfindung ragt der Temperatursensor 8 nicht in den Gasstrom, so dass keine Beeinflussung des Gasstromes auftritt.

In einer bevorzugten Ausführungsform der Erfindung ist der Temperatursensor 8 ein faseroptischer Sensor, das heisst, dass ein Lichtwellenleiter von einem Sensorkörper zur Messstelle führt. Der Lichtwellenleiter ist durch die Brennkammerwand geführt, wobei eine Linse an einem Ende des Lichtwellenleiters in der Brennkammerwand angeordnet ist, ohne in den Gaspfad hineinzuragen.

Die Messachse 13 des Temperatursensors 8 verläuft im wesentlichen in radialer Richtung. Der Sensor weist eine Linsenöffnung respektive einen Öffnungswinkel 14 auf, der beispielsweise 1 Grad beträgt. Je grösser der Öffnungswinkel 14 ist, desto höher ist auch die aufgenommene Strahlungsenergie und damit auch die Qualität des Messsignals. Andererseits führt ein zu weiter Öffnungswinkel zu Ungenauigkeiten in der lokalen Zuordnung des Messsignals. Die optimalen Grössen müssen hier im Bezug auf die geometrischen Dimensionen der Brennkammer gewählt werden.

Der Temperatursensor 8 funktioniert nach dem Prinzip eines Spektrometers. Im Gegensatz zu handelsüblichen Spektrometern arbeitet es jedoch nicht nur im optischen Strahlungsbereich, sondern je nach Anwendung auch im infraroten oder auch ultravioletten Bereich. Grosser Vorteil eines solchen Sensors ist, dass alle elektronischen Komponenten ausserhalb der Maschine und damit leicht zugänglich angeordnet werden können. Die Auskopplung des Strahlungssignals aus der Maschine erfolgt über Lichtwellenleiter, die lediglich Strahlung, aber noch kein elektrisches Signal übertragen.

Der Temperatursensor 8 ist vorzugsweise zur Messung der Temperatur einer bestimmten Komponente des Verbrennungsgases ausgebildet, insbesondere einer Komponente welche unabhängig vom verwendeten Brennstoff vorkommt. Als Komponenten, deren Temperatur gemessen wird eignen sich daher vor allem Wasserdampf (H₂O) oder Kohlendioxid (CO₂). Dazu wird der Sensor mit einem Bandpassfilter ausgestattet, der auf charakteristische Frequenzbänder der zu messenden Komponenten eingestellt ist Das heisst, dass das Filter nur für Strahlung in einem Frequenzband entsprechend der zu messenden Komponente durchlässig ist, und dass nur die vom Bandpassfilter durchgelassene Strahlung durch den Sensor gemessen wird. Dadurch wird verhindert, dass beispielsweise die Temperatur der naturgemäss kälteren Brennkammerwand gemessen wird. Die Wahl der gemessenen Komponente hängt im wesentlichen vom gewählten Brennstoff ab. Bei einem Brennstoff mit einem niedrigen C/H - Verhältnis, wie z. B. Erdgas, wird vorzugsweise Wasserdampf gewählt, da dieser den grössten Anteil an den Verbrennungsprodukten im Abgas hat. Bei hohem C/H-Verhältnis, wie z. B. bei Schweröl wird vorzugsweise Kohlendioxid gemessen, da sich das Gleichgewicht im Abgas aufgrund des höheren Kohlenstoffanteils im Brennstoff dorthin verschoben hat. Der Einfluss der Konzentration der gemessenen Komponente ist gering, da moderne Gasturbinen durch die Anwendung der Vormischverbrennung nur einen schmalen Regelbereich mit geringen Änderungen der Abgaskonzentration haben und dieser geringe Einfluss durch die Messung des Brennstoffstroms leicht linear kompensiert werden kann. Da die Erfindung vor allem dazu dient, Temperaturungleichförmigkeiten auf dem Brennkammerumfang zu minimieren, haben geringe Konzentrations- und damit Signaländerungen keinen Einfluss. Im Sinne der Erfindung werden keine absoluten Temperaturen, sondern Temperaturdifferenzen auf dem Brennkammerumfang gemessen. Die Höhe dieser Differenzen ist jedoch fast ausschliesslich von der relativen Brennstoffverteilung abhängig und nur wenig vom absoluten Brennstoffdurchsatz. Ein deutlicher Einfluss auf die Höhe des Messsignals geht jedoch vom Umgebungsdruck aus, wobei die Signalstärke mit höherem Druck zunimmt. Da der Betriebsdruck von stationären Gasturbinen jedoch innerhalb des Regelbereiches in erster Näherung konstant ist, kann dieser Einfluss zunächst vernachlässigt werden. Sollte eine Kompensation des Druckeinflusses notwendig sein, so ist diese durch die Verarbeitung eines ohnehin schon gemessenen Drucksignals leicht möglich, da der Druckeinfluss linear ist.

Ein Mess- oder Sensorwert des Temperatursensors 8 repräsentiert eine Summe aller durch das temperaturfeste Linsensystem des Sensors aufgenommenen Strahlung. Eine Frequenz der aufgenommenen Strahlung liegt innerhalb der Frequenzen, für welche das Bandpassfilter durchlässig ist, wobei der genaue Wert der Frequenz aufgrund des Planck'schen Wirkungsgesetzes der Maximaltemperatur des strahlenden Gases entspricht. Eine Bandbreite des Bandpassfilters ist also so schmal wie möglich, aber breit genug, um Strahlung der betrachteten Verbrennungsgaskomponente über einen im Betrieb der Gasturbine vorkommenden Temperaturbereich durchzulassen.

Sensorwerte von mehreren Temperatursensoren 8, wobei eine Gesamtheit deren Aufnahmebereiche Messgitter genannt werden, enthalten Informationen sowohl über eine räumliche und zeitliche Verteilung von Spitzentemperaturen als auch des Wärmestroms durch das Messgitter. Der Wärmestrom entspricht dem Integral der Temperaturverteilung bezogen auf den durchströmenden Massenstrom über dem radialen Querschnitt. Das Messsignal wird durch eine schnelle Fourier-Transformation analysiert. Damit lässt sich auch bei Verbrennungsfluktuationen sehr leicht sowohl die Spitzentemperatur als auch die Temperaturverteilung feststellen. Bei einer schnellen Fourier-Transformation (FFT) wird in bekannter Weise aus einer Menge diskreter Wertepaare (Zeit, Messwert), die über einen bestimmten, vorher gewählten Zeitraum gemessen wurden, eine Modellfunktion, bestehend aus der Summe der periodischen Funktionen Sinus und Cosinus, hergeleitet. Den periodischen Funktionen werden dabei diskrete Frequenzen, die untereinander einen konstanten Abstand delta-f haben, und Koeffizienten, die ein Mass für die Signalstärke bei der jeweiligen Frequenz sind, zugeordnet. Zeichnet man nun in einem Diagramm die Grösse der jeweiligen Koeffizienten als Funktion der Frequenz innerhalb eines Frequenzbereiches ein, so ist aus dem Verlauf der daraus entstehenden Kurve die Frequenz, auf der die höchste Signalstärke vorliegt, leicht ablesbar. Eine solche Darstellung nennt man daher auch Power-Spektrum. Es wird also ein zeitabhängiges Signal in eine frequenzabhängige Darstellung transformiert.

Liegt eine optimale Gastemperaturverteilung gemäss dem ersten Gastemperaturprofil 31 vor, so resultiert daraus ein bestimmter Sensorwert, im Folgenden Bezugswert genannt. Die folgenden Ausführungen betreffen die Bestimmung der Gastemperaturverteilung in radialer Richtung, unter der Annahme, dass Verbrennungsfluktuationen mit Frequenzen im akustischem Bereich keinen wesentlichen Einfluss auf die Messwerte haben.

Liegt eine suboptimale Temperaturverteilung entsprechend dem zweiten oder dritten Gastemperaturprofil 32,33 vor, so ist die radiale Lage der Spitzentemperatur von untergeordneter Bedeutung, da jedes Temperaturprofil dieser Art auf die Notwendigkeit grösserer Wartungsarbeiten hinweist

Die verschiedenen Gastemperaturprofile 31,32,33,34 lassen sich in folgender Weise unterscheiden: Ist bei gleichem Brennstoffmassenstrom die Spitzentemperatur gegenüber dem Bezugswert leicht beziehungsweise stark erhöht, so liegt eine Temperaturverteilung gemäss dem dritten respektive zweiten Gastemperaturprofil vor. Ist der Brennstoffmassenstrom geringer, wobei die Spitzentemperatur im wesentlichen gleich dem Bezugswert ist, so liegt das vierte Gastemperaturprofil vor. Aus der Art des Gastemperaturprofils lassen sich die folgenden Schlussfolgerungen ziehen:

Liegt eine ungleichmässige Verteilung gemäss dem zweiten Gastemperaturprofil 32 vor, so stellt sich eine stark überhöhte Spitzentemperatur ein, obwohl der Wärmestrom genau den Sollwert erreicht. In diesem Fall liegt ein schwerer Fehler in der Mischung von Brennstoff und Luft vor der Verbrennung bzw. Flammengas und Luft während und nach der Verbrennung vor. Ursache könnte Verschmutzung am Brenner, wahrscheinlicher jedoch ein mechanischer oder thermischer Schaden am Brennkammer-Liner sein. In jedem Fall sind sofortige Wartungsarbeiten einzuleiten.

Liegt eine ungleichmässige Verteilung gemäss dem dritten Gastemperaturprofil 33 vor, so ist die Ursache mit hoher Wahrscheinlichkeit in einer Verschmutzung oder Beschädigung der Brennstoffdüsen zu suchen. Die Spitzentemperatur ist leicht überhöht, trotzdem ist der Wärmestrom durch das Messgitter unterhalb des Sollwertes. Daher muss mehr Brennstoff im Zentrum der Strömung umgesetzt werden um die Verbrennung genügend zu stabilisieren. Hier kann durch eine Reduzierung des Brennstoffstromes kurzfristig ein Schutz der Turbinenleitreihe 3 erreicht werden. Langfristig sind auch hier Wartungsarbeiten notwendig.

Liegt eine ungleichmässige Verteilung gemäss dem vierten Gastemperaturprofil 34 vor, so erhält dieser Brenner zuwenig Brennstoff. Die Spitzentemperatur liegt zwar auf dem gewünschten Wert, der Wärmestrom ist jedoch zu gering, was sich im schwachen Gradienten der Gastemperatur in den Randbereichen zeigt. Dieser Fall ist typisch für eine ungleichmässige Brennstoffverteilung über die Brenner der Gasturbine. Bei Anwendung der Erfindung kann jedoch der Brennstoffstrom des individuellen Brenners erhöht und derjenige der restlichen Brenner soweit verringert werden, dass eine gleichmässige Energieverteilung in der Maschine vorliegt. Der Gesamtenergieumsatz der Maschine wird dabei wiederum durch den übergeordneten Regler bestimmt, der die Sollwerte für die einzelnen Brenner festlegt.

Ein gemessener Sensorwert dient als Kennwert zur Charakterisierung eines Gastemperaturprofils. Anhand eines gemessenen Sensorwertes wird auf die Art des vorliegenden Temperaturprofils geschlossen. Nach Massgabe einer Abweichung des gemessenen Sensorwertes vom Bezugswert werden durch den Regler 9 die Mittel zur Brennstoffeinbringung 7 angesteuert. Diese Regelung ist vorzugsweise durch einen schnellen PID-Regler zu realisieren, der auch dynamischen Änderungen, z. B. durch Lastwechsel, folgen kann. Ein Einsatz von Grenzwertreglern, bei denen das Stellventil 73 durch einen elektromotorischen Stellantrieb betätigt wird, ist prinzipiell auch möglich, jedoch muss hierbei eine geringere Regelgenauigkeit in Kauf genommen werden. In diesem Fall wird der Sollwert des Brennstoffstroms durch zwei möglichst enge Grenzwerte eingeschlossen. Beim unterschreiten des unteren Grenzwertes wird der elektromotorische Stellantrieb so aktiviert, dass das Stellventil 73 weiter geöffnet wird. Wird der untere Grenzwert wieder überschritten, so wird der Stellantrieb gestoppt. Gleiches geschieht bei Überschreiten des oberen Grenzwertes, nur dass hier das Stellventil weiter geschlossen wird. Wegen des geringen Regelbereichs von Vormischbrennern von ca. 70 K müssen die Grenzwert sehr eng gesetzt werden. Wird der obere Grenzwert zu hoch angesetzt, so steigt die adiabate Flammentemperatur auf über 1750 K an und es werden grosse Mengen an Stickoxiden gebildet. Wird dagegen der untere Grenzwert zu niedrig gesetzt, so kann die magere Löschgrenze unterschritten werden und Verbrennungsfluktuationen angeregt werden.

Die folgenden Ausführungen betreffen eine Regelung der Verbrennung, unter der Annahme, dass Verbrennungsfluktuationen mit Frequenzen im akustischem Bereich auftreten: In einer bevorzugten Ausführungsform der Erfindung wird nach Massgabe von Temperaturwerten eines Temperatursensors 8 ein dem Temperatursensor 8 zugeordnetes Mittel zur Brennstoffeinbringung 7 zur Kompensation, das heisst zur Dämpfung oder zur Elimination von axialsymmetrischen Verbrennungsfluktuationen geregelt. Zu diesem Zweck werden die Fluktuationen des Sensorsignals im Bereich akustischer Frequenzen, also von ca. 0 bis ca. 10 kHz durch untersucht.

Figur 2 zeigt schematisch eine weitere Ausführungsform der erfindungsgemässen Gasturbine mit einer entsprechenden Variante des Reglers 9. Das Signal wird in einem Signalfilter 91 gefiltert um eine Vorzugsfrequenz zu ermitteln, die üblicherweise < 2 kHz ist . Dann wird das gefilterte Signal durch ein Mittel zur Phasenverschiebung 92 um einen geeigneten Betrag phasenverschoben und durch einen Signalverstärker 93 verstärkt. Das so gewonnene Regelsignal wird an das rasch reagierende, elektromagnetische Stellglied oder zweites Stellelement 76 geleitet, das durch Bewegen des Modulationsventils 75 den Brennstoffstrom moduliert. Ein gleichartiges Verfahren wurde in C. O. Paschereit, E. Gutmark and W. Weisenstein "Flow-acoustic interactions as a driving mechanism for thermoacoustic instabilities" 4th AIAA/CEAS Aeroacoustics Conference, Toulouse, France, June 2-4 1998, AIAA Paper 98-2272, veröffentlicht. Die Konfiguration gemäss Figur 2 ist alternativ zur ursprünglichen Konfiguration mit dem Regler 9, dem Stellglied 74 und dem Ventil 73. Wird sie eingesetzt, so muss das Modulationsventil 75 zusätzlich zur Modulation des Brennstoffstroms auch den Gesamtzufluss von Brennstoff zum jeweiligen Brenner regulieren.

In einer anderen Ausführungsform der Erfindung weist das Mittel zur Brennstoffeinbringung 7 anstelle eines Ventils 73 jeweils ein Hauptventil und ein parallel dazu geschaltetes Modulationsventil auf, welche dem Brenner den Brennstoffmassenstrom zuführen. Dabei wird das Hauptventil auf einen Massenstrom eingestellt, der unter einem vorgegebenen Nennmassenstrom des Brenners liegt. Mit dem Modulationsventil wird ein zusätzlicher mit einer Anregungsfrequenz von 0.1 bis 1000 Hz periodisch modulierter Massenstrom addiert, so dass der gesamte Massenstrom des Brenners periodisch um einen Mittelwert in Höhe des Nennmassenstroms schwankt. Die Anregungsfrequenz wird in diesem Fall durch den Regler 9 nach Massgabe der gemessenen Verbrennungsfluktuationen bestimmt. Der Nennmassenstrom wird durch eine überlagerte Regelung der Gasturbine vorgegeben, welche beispielsweise Leistung, Drehzahl und/oder Temperaturen der Gasturbine regelt und überwacht.

In einer weiteren bevorzugten Ausführungsform der Erfindung werden nach Massgabe von Temperaturwerten mehrerer Temperatursensoren 8 mehrere Mittel zur Brennstoffeinbringung 7 zur Kompensation von azimutalen Verbrennungsfluktuationen durch eine gemeinsame Regelung geregelt.

### Bezugszeichenliste

- 1: Rotor
- 11: Symmetrieachse
- 12: Umfangssegment
- 13: Blickrichtung
- 14: Öffnungswinkel
- 2: Verdichterschaufelreihe
- 3: erste Leitschaufelreihe
- 31: erstes Gastemperaturprofil
- 32: zweites Gastemperaturprofil
- 33: drittes Gastemperaturprofil
- 34: viertes Gastemperaturprofil
- 4: erste Laufschaufelreihe
- 5: Plenum
- 51: Leitbleche
- 6: Brennkammer
- 61: Verbrennungsluftzuführung
- 62: Kühlluftzuführung
- 7: Mittel zur Brennstoffeinbringung
- 71: Brennstoffzuleitung
- 72: Brennstofflanze
- 73: Ventil
- 74: erstes Stellelement
- 75: Modulationsventil
- 76: zweites Stellelement
- 8: Temperatursensor
- 9: Regler
- 91: Signalfilter
- 92: Phasenverschiebung
- 93: Signalverstärker
- I: Schnittebene
- r: radiale Richtung
- r1: erster Radius
- r2: zweiter Radius
- t: Gastemperaturachse

## Patentansprüche

1. Verfahren zur Unterdrückung von Verbrennungsfluktuationen in einer Gasturbine, wobei mittels mehrerer Temperatursensoren (8) Temperaturwerte gemessen werden und nach Massgabe dieser Temperaturwerte Mittel zur Brennstoffeinbringung (7; 71,72,73,74,75,76) in eine Brennkammer (6) geregelt werden, wobei die Temperatursensoren (8) zur Messung einer Verbrennungsgastemperatur ausgebildet sind, und mit denen Verbrennungsgastemperaturen gemessen werden, welche unmittelbar vor einer ersten Leitschaufelreihe (3) herrschen, wobei nach Massgabe einer Abweichung eines Temperaturwertes eines Temperatursensors (8) von einem zugeordneten Bezugswert für alle Mittel zur Brennstoffeinbringung (7; 71,72,73,74,75,76) eine jeweilige Sollbrennstoffmenge reduziert wird, **dadurch gekennzeichnet, dass** in einem Abstand von 0,1 bis 5 cm vor der ersten Leitschaufelreihe mehrere Temperatursensoren, welche Spektrometer sind, gleichmässig über den Umfang der Gasturbine verteilt vorgesehen werden, dass zum Erhalt von den Temperaturwerten die Messsignale der Temperatursensoren mittels schneller Fourier-Transformation analysiert werden, und dass aufgrund von diesen Temperaturwerten ein zugeordnetes Gastemperaturprofil in azimutaler Richtung vor der ersten Leitschaufelreihe (3) ermittelt wird.

2. Verfahren nach Anspruch 1, **dadurch gekennzeichnet, dass** die Temperatursensoren (8) zur Messung einer Gastemperatur von Wasserdampf (H₂O), Kohlendioxid (CO₂), Stickstoff (N₂), Sauerstoff (O₂) oder einer anderen Verbrennungsgaskomponente eingesetzt werden.

3. Verfahren nach Anspruch 2, **dadurch gekennzeichnet, dass** die Temperatursensoren (8) Bandpassfilter aufweisen, welche für eine Strahlung entsprechend der betrachteten Verbrennungsgaskomponente durchlässig sind

4. Verfahren gemäss Anspruch 1 **dadurch gekennzeichnet, dass** anhand von Temperaturwerten eines Temperatursensors (8) ein dem Temperatursensor (8) zugeordnetes Mittel zur Brennstoffeinbringung (7; 71,72,73,74,75,76) zur Kompensation von axialsymmetrischen Verbrennungsfluktuationen geregelt wird.

5. Verfahren gemäss Anspruch 1, **dadurch gekennzeichnet, dass** anhand von Temperaturwerten mehrerer Temperatursensoren (8) die Mittel zur Brennstoffeinbringung (7; 71,72,73,74,75,76) zur Kompensation der azimutalen Verbrennungsfluktuationen geregelt werden.

## Claims

1. Method for suppressing combustion fluctuations in a gas turbine, temperature values being measured by means of a plurality of temperature sensors (8), and means (7;71,72,73,74,75,76) for introducing fuel into a combustion chamber (6) being controlled on the basis of these temperature values, the temperature sensors (8) being designed to measure a combustion-gas temperature and with which sensors combustion-gas temperatures are measured which prevail immediately in front of a first row of guide vanes (3), a desired quantity of fuel being reduced according to a deviation of a temperature value of a temperature sensor (8) from an associated reference value for all the means (7;71,72,73,74,75,76) for introducing fuel, **characterized in that** at a distance of 0.1 to 5 cm in front of the first row of guide vanes, a plurality of temperature sensors, which are spectrometers, are provided uniformly distributed over the circumference of the gas turbine, **in that** in order to receive the temperature values the measurement signals from the temperature sensors are analyzed by means of fast Fourier transform, and **in that** these temperature values are used to determine an associated gas-temperature profile in the azimuthal direction in front of the first row of guide vanes (3).

2. Method according to Claim 1, **characterized in that** the temperature sensors (8) are used to measure a gas temperature of steam (H₂O), carbon dioxide (CO₂), nitrogen (N₂), oxygen (O₂) or some other combustion-gas component.

3. Method according to Claim 2, **characterized in that** the temperature sensors (8) have bandpass filters, which transmit radiation corresponding to the combustion-gas component under consideration.

4. Method according to Claim 1, **characterized in that** a means (7;71,72,73,74,75,76) for introducing fuel which is assigned to the temperature sensor (8) is controlled on the basis of temperature values from a temperature sensor (8), in order to compensate for axially symmetrical fluctuations in combustion.

5. Method according to Claim 1, **characterized in that** the means (7;71,72,73,74,75,76) for introducing fuel are controlled on the basis of temperature values from a plurality of temperature sensors (8), in order to compensate for azimuthal fluctuations in combustion.

## Revendications

1. Procédé de suppression des fluctuations de combustion dans une turbine à gaz, dans lequel, au moyen de plusieurs capteurs de température (8), des valeurs de température sont mesurées et en fonction de ces valeurs de température des moyens d'introduction de carburant (7 ; 71, 72, 73, 74, 75, 76) dans une chambre de combustion (6) sont régulés, les capteurs de température (8) étant réalisés pour mesurer une température de gaz de combustion et permettant de mesurer des températures de gaz de combustion qui règnent directement avant une première rangée d'aubes directrices (3), une quantité de carburant de consigne respective étant réduite en fonction d'un écart d'une valeur de température d'un capteur de température (8) d'une valeur de référence associée pour tous les moyens d'introduction de carburant (7 ; 71, 72, 73, 74, 75, 76), **caractérisé en ce que** les capteurs de température, qui sont des spectromètres, sont répartis uniformément sur la périphérie de la turbine à gaz à une distance de 0,1 à 5 cm avant la première rangée d'aubes directrices, **en ce que** pour obtenir les valeurs de températures, les signaux de mesure des capteurs de température sont analysés au moyen d'une transformation de Fourier rapide, et **en ce que** sur la base de ces valeurs de températures, un profil de température de gaz associé est déterminé dans la direction azimutale avant la première rangée d'aubes directrices (3).

2. Procédé selon la revendication 1, **caractérisé en ce que** les capteurs de température (8) sont utilisés pour la mesure d'une température de gaz de vapeur d'eau (H₂O), de dioxyde de carbone (CO₂), d'azote (N₂), d'oxygène (O₂) ou d'un autre composant de combustion.

3. Procédé selon la revendication 2, **caractérisé en ce que** les capteurs de température (8) présentent des filtres passe-bande, qui laissent passer un rayonnement correspondant au composant de gaz de combustion considéré.

4. Procédé selon la revendication 1, **caractérisé en ce qu'**un moyen d'introduction de carburant (7 ; 71, 72, 73, 74, 75, 76) associé à un capteur de température (8) est régulé à l'aide de valeurs de température du capteur de température (8) pour la compensation de fluctuations de combustion symétriques axiales.

5. Procédé selon la revendication 1, **caractérisé en ce que** les moyens d'introduction de carburant (7 ; 71, 72, 73, 74, 75, 76) sont régulés à l'aide de valeurs de températures de plusieurs capteurs de température (8) pour la compensation de fluctuations de combustion azimutales.
